# EUROPEAN PATENT SPECIFICATION

(11) **EP 3 672 309 B1**
(45) Date of publication and mention of the grant of the patent: **25.10.2023**
(21) Application number: 18214714.0
(22) Date of filing: 20.12.2018
(51) Int. Cl.: H04W 12/069, H04W 12/104

(54) **ENABLING RECOGNIZING MANIPULATION OF POSITION DATA**
AKTIVIERUNG DER ERKENNUNG VON MANIPULATION VON POSITIONSDATEN
ACTIVATION DE LA RECONNAISSANCE DE MANIPULATION DE DONNÉES DE POSITION

(43) Date of publication of application: 24.06.2020
(73) Proprietor: HERE Global B.V., 5611 ZT Eindhoven (NL)
(72) Inventor: WIROLA, Lauri, 33100 Tampere (FI); SYRJÄRINNE, Jari, 33700 Tampere (FI)
(74) Representative: Cohausz & Florack

(56) References cited:
- EP-A1- 3 410 156
- WO-A1-2017/100686
- US-A1- 2017 078 851

## Description

### FIELD OF THE DISCLOSURE

The invention relates to the field of radio positioning and more specifically to enabling recognizing manipulation of position data representing an estimated position.

### BACKGROUND

Satellite signal based positioning technologies, which are mainly used outdoors, are usually not suited to deliver a satisfactory performance when used for indoor positioning, since satellite signals of global navigation satellite systems (GNSS), like the global positioning system (GPS) or the Galileo system, do not penetrate through walls and roofs strongly enough for an adequate signal reception indoors. Thus, these positioning technologies are not able to deliver a performance indoors that would enable seamless, equal and accurate navigation experience outdoors and indoors.

Therefore, several dedicated non-GNSS based radio positioning systems for indoor and outdoor positioning have been developed and commercially deployed during the past years. Examples comprise systems that are based on pseudolites, which are ground based GPS-like short-range beacons, ultra-sound positioning systems, Bluetooth low energy (BLE) based positioning systems, cellular network based positioning systems and wireless local area network (WLAN) based positioning systems.

Such a non-GNSS based radio positioning system (e.g. a self-contained positioning system) may be divided in at least three stages, an installation stage, a training stage and a positioning stage.

In the installation stage, dedicated positioning support radio devices (e.g. Bluetooth beacons) may be installed in the environment for which a positioning system is to be provided. Alternatively or additionally, a non-GNSS based radio positioning system may make use of existing radio devices like WLAN access points or cellular network nodes as positioning support radio devices.

In the subsequent training stage, positioning data are collected. The data may be collected in the form of radio fingerprint observation reports that are based on measurements by mobile devices. A radio fingerprint observation report may indicate an observation position and radio signal parameters obtained as a result of measurements taken from the radio interface when scanning for observable radio signals at the observation position. The observation position may be for example GNSS based, sensor-based, or manually inputted. Measurements taken from the radio interface may comprise, by way of example, measured received signal strengths and identifiers of radio devices (e.g. Bluetooth beacons, WLAN access points, base stations of a cellular network) transmitting the radio signals observable at the observation position. The training may be a continuous background process, in which mobile devices of a large number of consumers are continuously reporting collected fingerprint observation reports to a server. Consumers may consent to a participation in such a radio fingerprint observation report collection, if their device is equipped with the needed functionality. This approach is also referred to as crowd-sourcing. Since crowd-sourcing is a background process that does not directly benefit the device user, it is desirable that the crowd-sourcing process only consumes limited resources of the device.

Alternatively or additionally, mobile devices may be used for collecting radio fingerprint observation reports in a systematic manner. Collected reports may be uploaded to a database in a positioning server or in a positioning cloud, where algorithms may be run to generate radio models of positioning support devices (e.g. Bluetooth beacons, WLAN access points, base stations of a cellular network) and/or radio maps for positioning purposes.

In the positioning stage, a mobile device may estimate its current position based on own measurements taken from the radio interface and on information or a subset of information that is available from the training stage. Radio model information or radio map information that has been generated in the training stage may be provided to mobile devices by a positioning server via the Internet as assistance information for use in position estimation. Alternatively, radio model information and/or radio map information may be stored in a positioning server to which the mobile devices may connect to via the Internet for obtaining a position estimate. Related prior art is disclosed in the publications US 2017/078851 A1, WO 2017/100686 A1 and EP 3 410 156 A1.

### SUMMARY OF SOME EMBODIMENTS OF THE INVENTION

Radio positioning systems like non GNSS-based radio positioning systems (e.g. Bluetooth, WLAN and cellular based radio positioning systems) as disclosed above may be affected by manipulating radio signals that are used for positioning purposes during the positioning stage. Manipulation techniques may for example be spoofing or jamming of such radio signals:
- Spoofing of radio signals may be considered to relate to a deliberate attempt to deceive a mobile device by falsifying radio signals structured to resemble one or more authentic radio signals. This may for example be done by transmitting (e.g. broadcasting) one or more manipulated (e.g. falsified) radio signals or by retransmitting (e.g. rebroadcasting) authentic radio signals captured at a different position and/or time. Alternatively, a spoofing malware running on the mobile device may falsify scanning results (e.g. as scanning results obtained radio signal parameters) when the mobile device scans for observable radio signals for estimating its position. Such falsified (i.e. "spoofed") radio signals or scanning results may be used to cause the mobile device to determine its position to be somewhere other than where it actually is. Jamming of radio signals may be considered to relate a deliberate attempt to disrupt scanning for one or more radio signals by a mobile device, for example by transmitting radio signals and/or radio noise interfering the one or more radio signals.

Such manipulation techniques are a threat to business models which rely on trustworthy positioning like car sharing services. It is inter-alia an object of the present invention to improve radio positioning systems like the above disclosed non-GNSS based radio positioning systems to enable mitigating the threat associated with such manipulation techniques.

The present invention is defined by the subject matter of the appended set of claims. Further examples, aspects and embodiments useful for understanding the invention are now described.

According to an exemplary aspect of the invention, a method is disclosed, wherein the method is performed by a mobile device at least partially under control of a positioning program, the method comprising:
- estimating a position of the mobile device at least partially based on one or more radio signal parameters obtained by the mobile device, wherein position data representing the estimated position of the mobile device are obtained as a result of the estimating;
- determining a digital signature of the position data, wherein signature data representing the digital signature of the position data are obtained as a result of the determining;
- providing the position data and the signature data to one or more application programs.

The disclosed method may serve for enabling recognizing manipulation of position data representing an estimated position.

The mobile device may be an Internet-of-Thing (loT) device, a smart home device, a smartphone, a tablet computer, a notebook computer, a smart watch, and a smart band. For example, the mobile device may be one of the below disclosed mobile devices.

For example, the disclosed method may be part of or support a radio positioning system like a non-GNSS based radio positioning system as disclosed above. It is however to be understood that the present invention is not limited to non-GNSS based radio position system and may be applied to a GNSS-based radio positioning systems like GPS or Galileo as well.

The mobile device may be enabled for or support such a radio positioning system. This may be understood to mean that the mobile device is configured to estimate (e.g. determine) its position at least partially based on radio signal parameters of one or more radio signals (e.g. one or more satellite radio signals of a GNSS based radio signal or one or more terrestrial radio signals of a non-GNSS based radio signal) obtained by the mobile device at this position (e.g. obtained as a scanning result of scanning for observable radio signals at this position). For example, the computer program code representing the positioning program may contain and/or represent instructions for estimating (e.g. determining) the mobile device's position at least partially based on radio signal parameters of one or more radio signals obtained by the mobile device at this position.

The method may be understood to be performed at least partially under control of the positioning program, when the positioning program runs on the mobile device and causes the mobile device to perform one or more (e.g. all steps) of the disclosed method. All steps caused by the positioning program running on the mobile device are for example to be understood to be performed under control of the positioning program. To this end, the positioning program may be represented by computer program code which causes the mobile device, when executed by a processor (or by a plurality of processors) to perform one or more (e.g. all) steps of the disclosed method. Accordingly, the positioning program may be considered to run on the mobile device, when such a computer program code representing the positioning program is executed by a processor (or by a plurality of processors) of the mobile device, and causes the mobile device to perform one or more (e.g. all) steps of the disclosed method. For example, the computer program code representing the positioning program may be the below disclosed computer program code of a positioning program for a mobile device (e.g. the below disclosed computer program code stored in a non-transitory computer readable storage medium).

When the positioning program runs on the mobile device, it may for example provide certain positioning-related services to other programs running on the mobile device, for example the one or more application programs. In particular, the positioning program may serve for estimating the position of the mobile device and for providing position data representing the estimated position to other programs of the mobile device. The positioning program may for example communicate with other programs (e.g. the operating system and/or the application programs) running on the mobile device by means of one or more programming interfaces or services, for example by providing data to such other programs and/or by obtaining data from such other programs by means of one or more programming interfaces or services. Therein, data may be understood (1) to be, (2) to contain and/or (3) to represent information (e.g. coded information) like radio map information, position coordinates of an estimated position or radio signal parameters.

A radio signal parameter of a certain radio signal may for example be obtained by the mobile device as a scanning result when scanning for observable radio signals at a certain position (e.g. for estimating its position). Therein, a radio signal may be understood to be observable at a certain position if the radio signal is receivable with a minimum quality (e.g. a minimum signal-to-noise ratio and/or a minimum signal power, e.g. at least -90 dbm or -95 dbm) at this position. For example, the mobile device may determine at least one respective radio signal parameter for one or more (e.g. each) radio signal observed when scanning for radio signals at a certain position. The determined radio signal parameters may then for example be obtained as scanning results.

A radio signal parameter of a certain radio signal may be understood to be at least one of (1) an information like a radio positioning support information contained in or represented by the radio signal and (2) a representation (e.g. an indicator or a value) of a physical quantity (e.g. a received signal strengths) of the radio signal. Accordingly, a radio signal parameter may be determined by at least one of (1) extracting information contained in or represented by the radio signal and (2) measuring a physical quantity of the radio signal. An example of an information contained in or represented by a radio signal is a radio positioning support information enabling the mobile device alone or in combination with further information to estimate its position. A radio positioning support information may for example be a pseudorandom code and/or a message contained in or represented by a satellite radio signal of a GNSS based radio positioning system or an identifier contained in or represented by a terrestrial radio signal of a non-GNSS based radio positioning system. Example of a representation of a physical quantity of a radio signal are (1) a received signal strength indicator (RSSI), (2) a received signal strength value, (3) a time-of-arrival (TOA) value, (4) a time-of-flight (TOF) value and (5) an angle-of-arrival (AOA).

Estimating (e.g. determining) of a position of the mobile device at least partially based on obtained radio signal parameter(s) may be understood to mean that the estimating is performed as a function of the obtained radio signal parameter(s). For example, the position may be estimated by (1) triangulation at least partially based on AOA values of one or more (e.g. at least three) observed radio signals and/or (2) by trilateration or multilateration at least partially based on RSSIs or TOF values of one or more (e.g. at least three) observed radio signals and/or by determining a GNSS position at least partially based on radio positioning support information extracted from one or more observed radio signals. It is however to be understood that the estimating may optionally depend on further information like GNSS assist data of a GNSS based radio position system or a radio map of a non-GNSS based radio positioning system as disclosed above.

GNSS assist data is for example A-GPS (assistance GPS) data provided by an A-GPS server.

A radio map of a non-GNSS based radio positioning system may be configured to enable mobile devices to estimate their position at least partially based on this radio map when the mobile devices are located in the area covered by the radio map. For example, the radio map is represented by radio map information which may be provided (e.g. transmitted) by a positioning server to the mobile device and/or which may be held available by the mobile device (e.g. stored in memory means of the mobile device(s)). For example, the radio map contains or represents a respective radio model for a plurality of radio devices transmitting (e.g. broadcasting) radio signals that are observable within the area covered by the radio map. If the radio map covers a building, the radio map may contain or represent, for each floor of the building, a respective radio model for a plurality of radio devices transmitting (e.g. broadcasting) radio signals that are observable on the respective floor of the building. A radio model may represent an expected two-dimensional or three-dimensional radio coverage of a radio device. It may describe (e.g. define) the expected radio coverage area (e.g. on a certain floor of a building) of a radio device within which one or more radio signal parameters indicative of one or more radio signals transmitted by the radio device are expected to be observable. The real radio coverage of the radio device may however deviate from such an expected radio coverage. A radio model may be a hard-boundary model like a geometric radio model or a soft-boundary model like a parametric radio model or a radio image model. As disclosed above, the radio map may be determined by the positioning server during the training stage of the non-GNSS based radio positioning system.

As a result of estimating a position of the mobile device position data representing the estimated position of the mobile device may be obtained. For example, the position data contain or represent position coordinates of the estimated position like latitude and longitude and, optionally, altitude, of the estimated position. The obtained position data may be NMEA data (e.g. part of or configured to be part of an NMEA message or NMEA sentence) as specified by a NMEA a standard for communication between marine electronics (e.g. GNSS positioning devices) and many other types of instruments. The NMEA standards are developed by the National Marine Electronics Association (NMEA) and are presently available under: https://www.nmea.org/. In particular, the NMEA 0183 standard is a common standard for communication of position data (e.g. GNSS data).

The digital signature may be determined according to a digital signature algorithm. Input parameters of such an algorithm may be a cryptography key and the position data or a hash value of the position data. Accordingly, the digital signature may be determined at least partially based on such input parameters. An example for such a cryptography key is a private key of an asymmetric cryptography key pair. A hash value of the position data may be obtained according to a cryptography hash algorithm receiving the position data as input parameter. For example, the computer program code representing the positioning program may contain and/or represent instructions for determining the digital signature of the position data according to the digital signature algorithm and/or the cryptography hash algorithm.

Non-limiting examples for a digital signature algorithm for determining the digital signature are (1) the Digital Signature Algorithm (DSA) as specified in FIPS186 (e.g. FIPS186-4) standard by the National Institute of Standards and Technology (NIST) (https://csrc.nist.gov) and (2) the Rivest-Shamir-Adleman (RSA) algorithm as specified in PKCS#1 presently available as RFC8017 from the Internet Engineering Task Force (IETF) (https://tools.ietf.org/). As a result of determining a digital signature of the position data signature data representing the determined digital signature of the position data may be obtained.

Examples of cryptography hash algorithms are (1) Secure Hash Algorithm 1 (SHA-1) or the Secure Hash Algorithm 2 (SHA-2) family as specified in FIPS180 standards by the NIST, (2) Secure Hash Algorithm 3 (SHA-3) as specified in FIPS202 standard by the NIST or (3) the MD5 Message-Digest Algorithm (MD5) as specified in RFC1321 and RFC6151 presently available from the IETF.

The digital signature of the position data may enable an entity (e.g. the one or more application programs) receiving the position data and the digital signature (or digital signature data representing the digital signature) to verify the authenticity and/or integrity of the position data. Therein, verifying the authenticity and/or integrity of the position data may be understood to mean that it is checked whether or not the digital signature is valid for the position data (i.e. a valid digital signature of the position data). If it is confirmed that the digital signature is valid for the position data (i.e. a valid digital signature of the position data), the authenticity and/or integrity of the position data may be considered to be verified.

Verifying the authenticity and/or integrity of the position data may be performed according to a digital signature algorithm and/or a cryptography hash algorithm (e.g. the algorithm(s) used for determining the digital signature or (an) algorithm(s) corresponding to the algorithm(s) used for determining the digital signature). For example, the digital signature algorithm and/or the cryptography hash algorithm may be used to confirm that the digital signature is valid for the position data (i.e. is a digital signature of the position data). To this end, the digital signature algorithm and/or the cryptography hash algorithm may receive the position data, the digital signature (or signature data representing the digital signature) and a cryptography key as input parameter. An example for such a cryptography key is a public key of an asymmetric cryptography key pair. If the authenticity and/or integrity of the position data is not verified or verifiable by the signature data and the cryptography key (e.g. because the digital signature is not valid for the position data), the position data may be considered to be potentially manipulated (i.e. recognized as potentially manipulated).

The one or more application programs may be understood to be application programs of the mobile device. Accordingly, providing the position data and the signature data to the one or more application programs may be understood to mean that the position data and the signature data are provided such that they are receivable by (e.g. retrievable by) the application programs, for example by means of a programming interface or a service (e.g. being part of or defined by an operating system of the mobile device). Non-limiting exemplary operating systems of the mobile device are the iOS operating system and the Android operating system. The Android operating system is developed by Google primarily for touchscreen mobile devices and based on a modified version of the Linux kernel. A documentation of the Android operating system is presently available under: https://developer.android.com/. The iOS operating system is developed by Apple Inc. exclusively for its mobile devices like the iPhone, iPad, and iPod Touch. A documentation of the iOS operating system is presently available under: https://developer.apple.com/ios/.

The application programs may for example be part of a higher software layer of a software architecture of the mobile device than the positioning program. For example, the application programs are part of the application layer; and the positioning program may for example be part of a lower software layer which provides services to application programs of the application layer (e.g. an operating system layer or a service layer). For example, the positioning program is one of a middleware, a firmware or part of the operating system of the mobile device.

It is however to be understood that the invention is not limited to this. Alternatively, at least one of the one or more application programs may be an application program of another device (i.e. different to and/or remote from the mobile device) like the positioning server. In this case, providing the position data and the signature data to this application program may be understood to mean that the position data and the signature data are transmitted by the mobile device to the other device such that they are receivable by this application program, for example by means of a network interface of the mobile device.

By providing the position data together with the signature data to the one or more application programs, the applications programs are enabled to verify the authenticity and/or integrity of the position data. If the position data provided by the positioning program are intercepted and manipulated by a malware, they will thus be identified or recognized by the application program as potentially manipulated. The disclosed method thus serves for enabling recognizing manipulation of position data representing an estimated position.

According to a further exemplary aspect of the invention, a mobile device is disclosed, wherein the mobile device comprises means for performing the steps of any one embodiment of the disclosed method or a part thereof (e.g. at least some steps of any one embodiment of the disclosed method).

The means of the disclosed mobile device can be implemented in hardware and/or software. They may comprise for instance a processor for executing computer program code (e.g. computer program code of a positioning program for a mobile device as disclosed below) for realizing the required functions, a memory storing the computer program code, or both. Alternatively, they could comprise for instance circuitry that is designed to realize the required functions, for instance implemented in a chipset or a chip, like an integrated circuit. The disclosed mobile device may comprise a single means for all functions, a common plurality of means for all functions, or a plurality of different means for different functions.

According to a further exemplary aspect of the invention, a mobile device is disclosed, wherein the mobile device comprises at least one processor and at least one memory containing computer program code (e.g. computer program code of a positioning program for a mobile device as disclosed below), the at least one memory and the computer program code with the at least one processor configured to cause the mobile device at least to perform any one embodiment of the disclosed method (e.g. the steps of any one embodiment of the disclosed method) or a part thereof (e.g. at least some steps of any one embodiment of the disclosed method).

For example, the disclosed mobile device(s) may be (a) module(s) or component(s) for (a) mobile device (s), for example (a) chip(s) or chipset(s). Alternatively, the disclosed mobile device(es) may be (a) mobile device(s). The mobile device may be configured for determining its position based on a non-GNSS based radio positioning system as disclosed above, for example a Bluetooth, WLAN, LPWAN or cellular based radio positioning system or a combination thereof.

It is to be understood that the disclosed mobile device(s) may comprise only the disclosed components (e.g. means) or may further comprise one or more additional components (e.g. means). Examples of such additional components are a radio interface (e.g. a receiver, a transmitter and/or a transceiver), a data interface, a user interface (e.g. a touch-sensitive display, a keyboard, a touchpad, a display, etc.), a sensor, etc.

According to a further exemplary aspect of the invention, a radio positioning system is disclosed which comprises at least one of the disclosed mobile device(s) and a positioning server. Optionally, the system may further comprise one or more radio devices transmitting (e.g. broadcasting) one or more radio signals.

As disclosed above, the positioning server may be configured to receive a plurality of radio fingerprint observation reports during the training stage and to determine a radio map for a predetermined environment at least partially based on the plurality of radio fingerprint observation reports. The positioning server may be further configured to provide the radio map to one or more mobile devices (e.g. the mobile device) to enable the mobile devices to estimate (e.g. determine) their position based on radio signals observed at a certain position of the mobile devices if the mobile devices are located within the predetermined environment.

The positioning server may be part of a plurality of servers (e.g. forming a positioning cloud) or may be represented by such a plurality of servers (e.g. forming a positioning cloud).

According to a further exemplary aspect of the invention, a non-transitory computer readable storage medium is disclosed, in which computer program code (e.g. computer program code of a positioning program for a mobile device as disclosed below) is stored. The computer program code causes a mobile device to perform any one embodiment of the disclosed method (e.g. the steps of any one embodiment of the disclosed method) when executed by a processor or by a plurality of processors. The computer program code could be stored in the computer readable storage medium in the form of instructions encoding the computer-readable storage medium. The computer readable storage medium may be intended for taking part in the operation of a device, like an internal or external hard disk of the device, or be intended for distribution of the computer program code, like an optical disc.

According to a further exemplary aspect of the invention, a computer program code of a positioning program for a mobile device is disclosed, the computer program code when executed by a processor (or by a plurality of processors) causing an mobile device to perform any one embodiment of the disclosed method (e.g. the steps of any one embodiment of the disclosed method).

The disclosed method, mobile device(s), system, non-transitory computer readable storage medium and computer program code may be for enabling recognizing manipulation of position data representing an estimated position.

In the following, further features and embodiments of these exemplary aspects of the invention will be described.

According to an exemplary embodiment of the invention, the digital signature is determined at least partially based on a private key embedded in or accessible by the positioning program and a digital signature algorithm.

That the digital signature is determined at least partially based on a private key and a digital signature algorithm may be understood to mean that the digital signature is determined according to the digital signature algorithm which receives the private key as an input parameter.

The private key may for example be part of a key pair for asymmetric cryptography. For example, the key pair comprises the private key and a corresponding public key.

As disclosed above, the digital signature algorithm may be RSA or DSA. Accordingly, the private key may be part of an RSA key pair or a DSA key pair.

The private key may be considered to be accessible by the positioning program if it is stored in secure storageof the mobile device. Therein, the secure storage may be understood to be a data container (e.g. a file or a database) or to be part of a memory area which is (e.g. only) accessible by the positioning program. To this end, the secure storage may be only accessible by programs and/or users that have been granted access rights for accessing (e.g. reading and/or writing) this memory area. Accordingly, the positioning program may be considered to have access to the private key if it has access rights for accessing (e.g. reading and/or writing) the private key or the secure storage storing the private key. For example, only the positioning program may have access rights for accessing (e.g. reading and/or writing) the private key or accessing the secure storage storing the private key.

Such a secure storage may be managed and/or protected by the operating system of the mobile device. Examples of functionalities of operating systems managing and/or protecting such a secure storage are (1) the keystore-service of the Android operating system or (2) the keychain-service of the iOS operating system.

That the private key is embedded in the positioning program may be understood to mean that the private key or a representation of the private key is part of the computer program code representing the positioning program. In this case, the private key may be stored in the same memory area or the same data container of the mobile device like the computer program code and, thus, it may be considered to be accessible by the positioning program. To prevent other programs and/or users from accessing the private key, it may be part of the of the computer program code representing the positioning program in encrypted form.

According to an exemplary embodiment of the invention, the position data and the signature data are provided to the application programs by means of a predefined programming interface and/or a predefined service.

For example, the predefined programming interface or the predefined service may be part of or defined by an operating system of the mobile device. As disclosed above, non-limiting exemplary operating systems of the mobile device are the iOS operating system and the Android operating system.

In case of the Android operating system, the predefined programming interface or the predefined service may be part of or defined by the android.location API package of the Android operating system which contains the framework API classes that define location-based and related services. An example of a predefined programming interface may be the "OnNmeaMessageListener" interface of the android.location API package which may be implemented by the application programs to receive NMEA data. Accordingly, the positioning program may be configured to provide the position data as NMEA data (e.g. in the form of one or more NMEA messages) such that they can be received by the application programs implementing the "OnNmeaMessageListener" interface of the android.location API package.

In case of the iOS operating system, the predefined programming interface or the predefined service may be part of or defined by the "Core Location" Framework of the iOS operating system which provides services for determining the mobile device's geographic location, altitude, orientation, or position relative to a nearby iBeacon. For example, the positioning program may be configured to provide the position data as part of a "CLLocation" object of the "Core Location" Framework of the iOS operating system such that they can be received by the application programs requesting location updates from the "CLLocationManager" of the "Core Location" Framework of the iOS operating system.

According to an exemplary embodiment of the invention, at least one of the position data and the signature data are provided by means of one or more NMEA messages. For example, the one or more NMEA messages may contain or represent at least one of the position data and the signature data.

AN NMEA message may be understood to be a message or a sentence as specified by a NMEA a standard for communication between marine electronics (e.g. GNSS positioning devices) and many other types of instruments. The NMEA standards are developed by the National Marine Electronics Association (NMEA) and are presently available under: https://www.nmea.org/. In particular, the NMEA 0183 standard is a common standard for communication of position data (e.g. GNSS data). An NMEA message at least partially containing or representing the position data may be a talker message or a talker sentence as specified by a NMEA standard. An NMEA message at least partially containing or representing the signature data may be understood to be a proprietary message or a proprietary sentence. The NMEA standards allow the definition of such proprietary messages or proprietary sentences.

The data represented by or contained in an NMEA message may be understood to be NMEA data.

According to an exemplary embodiment of the invention, the method as disclosed above is performed by the mobile device under control of the positioning program. In particular, the above disclosed steps relating to (1) estimating a position of the mobile device, (2) determining a digital signature of the position data and (3) providing the position data and the signature data may be performed under control of the positioning program.

According to an exemplary embodiment of the invention, the method further comprises:
- receiving, by at least one application program of the one or more application programs, the position data and the signature data;
- verifying, under control of the at least one application program, an authenticity and/or integrity of the position data at least partially based on the signature data.

As disclosed above, providing the position data and the signature data to the one or more application programs may be understood to mean that the position data and the signature data are communicated to or provided such that they receivable by (e.g. retrievable by) the application programs, for example by means of a programming interface or a service (e.g. being part of or defined by an operating system of the mobile device). Accordingly, receiving the position data and the signature data by the one or more application programs may be understood to mean that the position data and the signature data are received (e.g. obtained) or retrieved by the application programs, for example by means of a programming interface or a service (e.g. being part of or defined by an operating system of the mobile device). Examples of such programming interfaces are disclosed in more detail above.

As further disclosed above, verifying the authenticity and/or the integrity of the position data may be performed according to a digital signature algorithm and/or a cryptography hash algorithm (e.g. the algorithm(s) used for determining the digital signature or (an) algorithm(s) corresponding to the algorithm(s) used for determining the digital signature) which receive(s) the digital signature (or data representing the digital signature) and the position data as input parameter. Non-limiting examples for such a digital signature algorithm are DSA or RSA; and examples of cryptography hash algorithms are SHA-1, SHA-3 or MD5 as disclosed above in more detail. For example, the computer program code representing the at least one application program may contain and/or represent instructions for verifying the authenticity and/or the integrity of the position data according to the digital signature algorithm and/or the cryptography hash algorithm.

Moreover, the authenticity and/or integrity of the position data may be verified further based on a cryptography key. For example, the digital signature algorithm for verifying the authenticity and/or integrity of the position data may receive the cryptography key as input parameter. An example for such a cryptography key is a public key of an asymmetric cryptography key pair, for example an asymmetric cryptography key pair comprising the private key used for determining the digital signature. For example, the private key may be part of an RSA key pair or a DSA key pair.

Such a public key may be embedded in or accessible by the at least one application program.

The public key may be considered to be accessible by the at least one application program if it is stored in a secure storage of the mobile device which is accessible by the at least one application program. To this end, the public key may be stored in a secure storage of the mobile device which is only accessible by programs and/or users that have been granted access rights for accessing (e.g. reading and/or writing) this secure storage. Accordingly, the application program may be considered to have access to the public key if it has access rights for accessing (e.g. reading and/or writing) the public key or accessing the secure storage storing the public key. For example, only the at least one application program may have access rights for accessing (e.g. reading and/or writing) the public key or accessing the secure storage storing the public key.

As disclosed above, such a secure storage may be understood to be a data container (e.g. a file or a database) or to be part of a memory area. Moreover, such a secure storage may be managed and/or protected by the operating system of the mobile device.. Examples of functionalities of operating systems managing and/or protecting such a memory area are (1) the keystore-service of the Android operating system or (2) the keychain-service of the iOS operating system.

That the public key is embedded in the at least one application program may be understood to mean that the public key or a representation of the public key is part of the computer program code representing the at least one application program. In this case, the public key may be stored in the same memory area or the same data container of the mobile device like the computer program code and, thus, it may be considered to be accessible by the positioning program. To prevent other programs and/or users from accessing the public key, it may be part of the of the computer program code representing the at least one application program in encrypted form.

If the authenticity and/or integrity of the position data is not verified or verifiable by the signature data and the cryptography key, the position data may be considered to be potentially manipulated (i.e. recognized as potentially manipulated). This may for example be the case if the position data provided by the positioning program are intercepted and manipulated by a malware.

Moreover, the method may further comprise at least one of the following, if the authenticity and/or integrity of the position data are verified:
- identifying, under control of the at least one application program, the position data as trustworthy;
- processing, under control of the at least one application program, the position data.

Alternatively or additionally, the method may further comprise at least one of the following, if the authenticity and/or integrity of the position data are not verified:
- identifying, under control of the at least one application program, the position data as potentially manipulated;
- rejecting, under control of the at least one application program, the position data.

Identifying the position data as trustworthy may be understood to mean that trust data identifying the position data as trustworthy are stored by the mobile device; and identifying the position data as potentially manipulated may be understood to mean that trust data identifying the position data as potentially manipulated are stored by the mobile device. For example, the trust data may be stored together with or may be added to the position data.

By identifying the position data as trustworthy or as potentially manipulated, this can be considered when further processing the position data. For example, for certain business services which rely on trustworthy positioning like car sharing services only position data identified as trustworthy may be used. For other business services position data may be used even if they are not identified as trustworthy (e.g. as potentially manipulated).

Processing the position data may be understood to mean that the position data are further processed under control of the at least one application program. For example the position data may be further processed as input parameter of an algorithm performed under control of the at least one application program. Rejecting the position data may be understood to mean that the rejected position data are not further processed under control of the at least one application program.

As disclosed above, the disclosed method is performed by a mobile device at least partially under control of a positioning program. This may however be understood to mean that at some steps of the disclosed method may be performed under control of the at least one application program. In particular, the above disclosed steps relating to (1) verifying an authenticity of the position data, (2) identifying, the position data as trustworthy or as potentially manipulated and (3) processing or rejecting the position data may be performed under control of the at least one application program.

A certain step of the disclosed method may be understood to be performed under control of the at least one application program, when the at least one application program runs on the mobile device and causes the mobile device to perform the certain step of the disclosed method. For example, all steps caused by the at least one application program program running on the mobile device are to be understood to be performed under control of the at least one application program. To this end, the at least one application program may be represented by computer program code which causes the mobile device, when executed by a processor (or by a plurality of processors) to perform one or more steps of the disclosed method. Accordingly, the at least one application program may be considered to run on the mobile device, when such a computer program code representing the at least one application program is executed by a processor (or by a plurality of processors) of the mobile device, and causes the mobile device to perform one or more steps of the disclosed method.

According to an exemplary embodiment of the invention, the one or more radio signal parameters are radio signal parameters of one or more radio signals observed by the mobile device at an observation position.

For example, each of the one or more radio signals is one of:
- a GNSS satellite radio signal,
- a cellular radio signal,
- a Bluetooth radio signal;
- an LPWAN radio signal;
- a WLAN radio signal.

Accordingly, the one or more radio signals may be transmitted by one or more of the following radio devices:
- a GNSS satellite;
- a Bluetooth beacon (e.g. a Bluetooth beacon enabling Bluetooth low energy mode or a Bluetooth low energy beacon);
- an access point of a wireless local area network;
- an access point of a low-power wide area network; and
- a cellular network node.

A GNSS satellite may for example be one of a GPS or Galileo satellite having a radio interface which includes at least a radio transmitter for transmitting a GPS or Galileo satellite signal. GNSS based positioning technologies are supported by many mobile devices by default such as most smartphones, most tablet computers, most notebook computers, most smart watches and most smart bands, etc. Using GNSS satellite radio signals may thus have the effect that many mobile devices may make use of the invention without any adaptation of hardware.

The Bluetooth beacons may comprise a Bluetooth and/or BLE radio interface, which includes at least a Bluetooth and/or BLE transmitter. The Bluetooth and/or BLE transmitter may also be a part of a Bluetooth and/or BLE transceiver. The Bluetooth and/or BLE radio interface may be configured to transmit Bluetooth and or BLE radio signals. A Bluetooth beacon that is employed for the invention may be any kind of Bluetooth beacon complying with any present or future standard. The Bluetooth standards are specified by the Bluetooth Special Interest Group and are presently available under https://www.bluetooth.com/.

Such Bluetooth beacons may be easily installed as dedicated position support radio devices at various installation positions and require little to no maintenance. For example, a plurality of Bluetooth beacons may be easily distributed across a certain area and may cover a certain area (e.g. the area of the environment represented by the radio map and/or of the above disclosed system) with Bluetooth radio signals transmitted (e.g. broadcasted) by the Bluetooth beacons. Also, Bluetooth technologies are supported by many mobile devices by default such as most smartphones, most tablet computers, most notebook computers, most smart watches and most smart bands, etc. Using Bluetooth beacons and/or BLE beacons may thus have the effect that many mobile devices may make use of the invention without any adaptation of hardware. Moreover, such a non-GNSS based positioning system enables indoor positioning, for examples if no GNSS satellite signals are receivable. As a result, the approach may be globally scalable and have low maintenance and deployment costs. In addition, regarding positioning utilizing received signal strength the end-user experience may be acceptable with these technologies, since a horizontal positioning accuracy of 2 to 3 meters as well as a high reliability in floor detection may be achieved. The Bluetooth beacons may be stand-alone devices or be integrated into or attached to some other device. Bluetooth beacons, in particular in low energy mode, require comparably little energy and the use of Bluetooth low energy may enable a positioning with limited energy consumption at all involved devices.

It is to be understood, however, that other types of radio devices than variations of Bluetooth beacons may be used as well as dedicated position support radio devices, for instance tags or other devices that are configured to transmit ultra-wideband (UWB) signals or any wireless radio signals that might emerge in the future.

Moreover, existing radio devices like WLAN access points, LPWAN access points or cellular network nodes may be used alternatively or additionally.

A WLAN access point may comprise a WLAN radio interface, which for example includes a WLAN transceiver. The WLAN radio interface may be configured to transmit and/or receive WLAN radio signals. Accordingly, the radio signal transmitted by such an access point and/or router of a WLAN may be a WLAN radio signal. WLAN is for example specified by the standards of the IEEE 802.11 family (http://www.ieee.org/).

An LPWAN access point may comprise an LPWAN radio interface, which for example includes an LPWAN transceiver. The LPWAN radio interface may be configured to transmit and/or receive LPWAN radio signals. Accordingly, the radio signal transmitted by such an access point of an LPWAN may be an LPWAN radio signal. Examples of LPWAN specifications are the LoRaWAN specification developed by the LoRa Alliance and presently available under https://lora-alliance.org/ as well as the Narrowband loT (NB-IoT) specification developed by 3GPP and presently available under http://www.3gpp.org/.

A cellular network node may be a base transceiver station (BTS) or a node-B of a cellular network like a 2G/3G/4G/5G cellular communication network. A cellular network node may comprise a cellular radio interface, which for example includes a 2G/3G/4G/5G transceiver. Accordingly, the radio signal transmitted by such cellular network node may be a 2G/3G/4G/5G cellular radio signal. The 2G/3G/4G/5G cellular radio communication standards are developed by the 3GPP and presently available under http://www.3gpp.org/.

According to an exemplary embodiment of the invention the estimating a position of the mobile device is further at least partially based on a radio map of a non-GNSS based radio positioning system.

As disclosed above, a radio map of a non-GNSS based radio positioning system may represent, for each radio device of a plurality of radio devices, a respective radio model like a hard-boundary model or a soft-boundary model.

An example for a soft-boundary radio model may be a parametric radio model. For example, such a parametric radio model may represent or comprise one or more radio transmission parameters (e.g. path-loss exponent and transmission power) characteristic for the expected propagation of one or more radio signals transmitted by a radio device. Using radio transmission parameters of the parametric radio model may have the effect that the required amount of data for defining the one or more characteristics of one or more radio signals may be particularly small. An example of a parametric radio model is a path loss model for radio signals transmitted or triggered to be transmitted by a radio device. In this case, the radio transmission parameters may comprise a path loss exponent and an indication of a transmission power used by the transmitter of the radio device. Based on the parametric radio model an expected radio coverage of a radio device may be determined.

Alternatively or additionally, a soft boundary radio model may be a radio image model representing an expected radio signal strength field of a radio signal transmitted or triggered to be transmitted by a radio device. An example of such a radio image model is a signal strength matrix model like a signal strength heatmap or a signal strength matrix.

An example for a hard-boundary radio model may be a geometric model. The radio model may be referred to as a geometric model of an expected radio coverage of a radio device if it is a geometric shape, such as for example a polygon, a rectangle and/or a square, a cuboid and/or a cube, an ellipse and/or a circle or an ellipsoid and/or a sphere. Using such geometric models representing the expected radio coverage of respective radio devices within the predetermined environment of the radio map has the effect that the radio model is very simple, only requires a small amount of data and is easy to analyze.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a block diagram of an exemplary embodiment of a system according to the invention;
- Fig. 2: is a block diagram of an exemplary embodiment of a mobile device according to the invention;
- Fig. 3: is a block diagram of an exemplary embodiment of a positioning server according to the invention;
- Fig. 4: is a block diagram of an exemplary embodiment of a radio device according to the invention;
- Fig. 5: is a flow chart illustrating an exemplary embodiment of a method according to the invention;
- Fig. 6A, B: illustrate exemplary software architectures of a mobile device according to the invention;
- Fig. 7: is a schematic illustration of examples of tangible and non-transitory storage media according to the invention.

### DETAILED DESCRIPTION OF THE FIGURES

The following description serves to deepen the understanding of the present invention and shall be understood to complement and be read together with the description of example embodiments of the invention as provided in the above SUMMARY section of this specification.

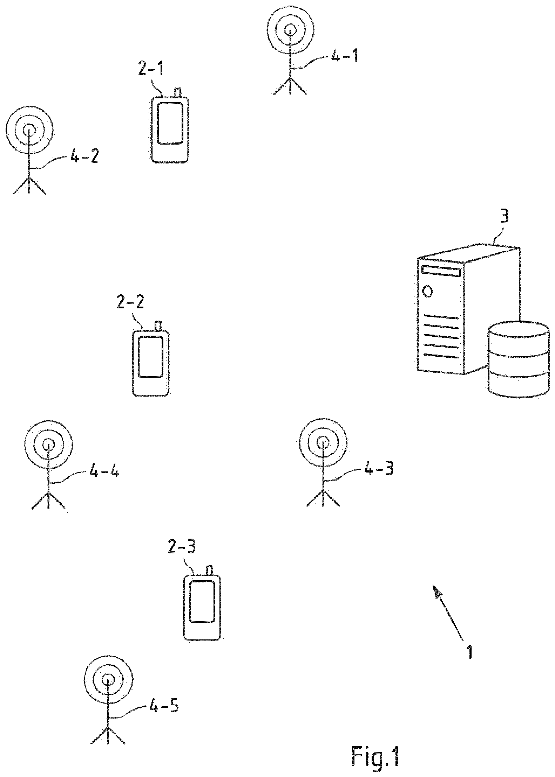

Fig. 1 is a schematic high-level block diagram of a radio positioning system 1 according to an exemplary aspect of the invention. For exemplary purposes and without limiting the scope of the invention, it is assumed in the following that system 1 is a non-GNSS based radio positioning system for a predetermined environment like a building or a complex of buildings (e.g. a shopping center, a parking garage, an airport, a company site, etc).

For example, each of mobile devices 2-1 to 2-3 may be one of a smartphone, a tablet computer, a notebook computer, a smart watch and a smart band. Mobile devices 2-1 to 2-3 may be enabled for or support non-GNSS based radio positioning system 1.

System 1 comprises a positioning server 3 and a plurality of optional radio devices 4-1 to 4-5.

System 1 is not limited to a single positioning server 3, but may optionally comprise a plurality of servers (e.g. forming a server cloud). Accordingly, positioning server 3 may be part of such a plurality of servers (e.g. a server cloud) or may be represented by such a plurality of servers (e.g. a server cloud).

For exemplary purposes and without limiting the scope of the invention, it is assumed in the following that radio devices 4-1 to 4-5 are dedicated position support radio devices in the form of BLE beacons 4-1 to 4-5 fixedly installed in the predetermined environment of system 1. However, system 1 may comprise further radio devices or BLE beacons. In the following, it is thus referred to BLE beacons 4-1 to 4-5 without limiting the scope of the invention. As disclosed below in more detail, each of BLE beacons 4-1 to 4-5 may be configured to automatically and repeatedly transmit a respective BLE radio signal like an advertisement signal. The BLE radio signals transmitted by radio devices 4-1 to 4-5 may contain and/or represent positioning support information which are configured to enable mobile devices 2-1 to 2-3 to estimate their position at least partially based on this positioning support information. An example of such positioning support information is an identifier like an UUID of the respective one of radio devices 4-1 to 4-5 transmitting the respective radio signal containing this positioning support information.

In the training stage of system 1, mobile devices like mobile devices 2-1 to 2-3 may collect radio fingerprint observation reports indicating an observation position within the predetermined environment and the UUIDs contained in or represented by the BLE radio signals transmitted by BLE beacons 4-1 to 4-5 observable at the observation position. The collected radio fingerprint observation reports may be provided (e.g. transmitted) by the mobile devices to positioning server 3 for determining a radio map.

For example, the radio map may be configured to enable mobile devices 2-1 to 2-3 to estimate their position at least partially based on this radio map when the mobile devices are located within the predetermined environment of system 1 (i.e. the area covered by the radio map). For example, the radio map is represented by radio map information which may be provided (e.g. transmitted) by a positioning server 3 to mobile devices 2-1 to 2-3 and/or which may be held available by mobile device 2-1 to 2-3 (e.g. stored in a memory of mobile devices 2-1 to 2-3). For example, the radio map contains or represents a respective radio model for each of BLE beacons 4-1 to 4-5. Moreover, the radio map may represent the respective installation position of each of BLE beacons 4-1 to 4-5. As disclosed above, a respective radio model for a respective BLE beacon of BLE beacons 4-1 to 4-5 may be understood to represent at least the expected radio coverage of the respective radio device. For example, the radio model of such a BLE beacon may at least describe the coverage area within which radio signals transmitted by this radio device are expected to be observable.

In the positioning stage, mobile devices 2-1 to 2-3 may use the radio map to determine their position at least partially based on radio signal parameters of observable radio signals. For example, if mobile device 2-1 obtains radio signal parameters (e.g. UUIDs, received signal strength value/indicator, etc.) of three BLE radio signals transmitted by BLE beacons 4-1, 4-2 an 4-3 when scanning for observable radio signals at its present position, it may for example determine (e.g. estimate) by use of the radio map that its presents position is within the overlapping region of the coverage areas described by the radio models of BLE beacons 4-1, 4-2 an 4-3.

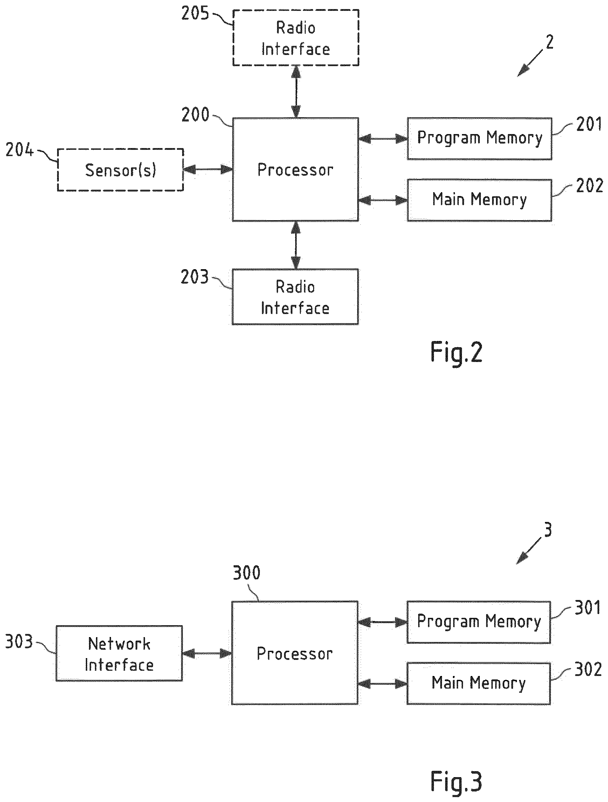

Fig. 2 is a block diagram of an exemplary embodiment of mobile device 2 according to the invention. In the following, it is assumed that mobile devices 2-1 to 2-3 of Fig. 1 corresponds to this mobile device 2.

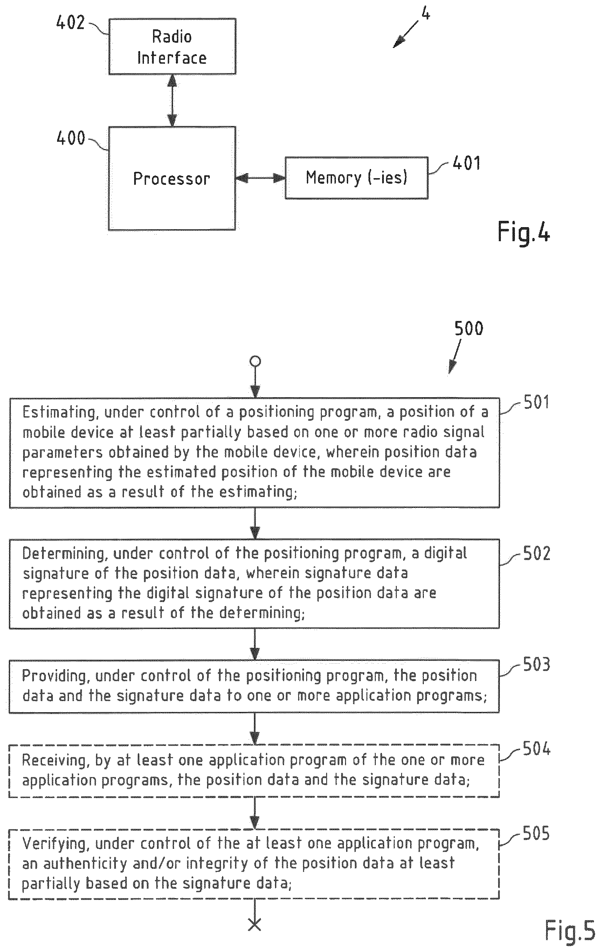

Mobile device 2 comprises a processor 200. Processor 200 may represent a single processor or two or more processors, which are for instance at least partially coupled, for instance via a bus. Processor 200 executes a computer program code stored in program memory 201 (e.g. computer program code representing a positioning program and/or an application program causing mobile device 2 to perform any one embodiment of the disclosed method (e.g. the steps of any one embodiment of the disclosed method) or a part thereof (e.g. at least some steps of any one embodiment of the disclosed method) (as for instance further described below with reference to Fig. 5), when executed on processor 200), and interfaces with a main memory 202. Program memory 201 may also contain an operating system (e.g. an Android operating system) for processor 200 and radio map information representing a radio map of the predetermined environment of system 1. Some or all of memories 201 and 202 may also be included into processor 200. One of or both of memories 201 and 202 may be fixedly connected to processor 200 or at least partially removable from processor 200, for example in the form of a memory card or stick.

A program memory (e.g. program memory 201) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 202) may for example be a volatile memory. It may for example be a DRAM memory, to give non-limiting example. It may for instance be used as a working memory for a processor (e.g. processor 200) when executing an operating system and/or programs.

Processor 200 further controls a radio interface 203 configured for receiving and, optionally, transmitting radio signals. A radio interface may be or may comprise a radio receiver circuit and/or a radio transmitter circuit and/or a radio transceiver circuit Such circuits may comprise modulators, filters, mixers, switches and/or one or more antennas to allow transmission and/or reception of radio signals.

In the following, it is assumed for exemplary purposes that radio interface 203 is a BLE transceiver configured to transmit and receive BLE radio signals in line with any current or future version of the Bluetooth standard supporting a low energy mode. Radio interface 203 enables mobile device 2 to scan for observable BLE radio signals transmitted (e.g. broadcasted) by BLE beacons 4-1 to 4-5 of system 1. Therein, a BLE radio signal may be understood to be observable if the BLE radio signal is receivable with a minimum quality (e.g. a minimum signal-to-noise ratio and/or a minimum signal power, e.g. at least -90 dBm or -95 dBm). Moreover, the BLE transceiver is configured, alone or together with processor 200, to determine one or more radio signal parameters of BLE radio signals observed (e.g. received) when scanning for observable radio signals. To this end, the BLE transceiver may for example extract, from each observed BLE radio signal, the respective UUID contained therein and measure the respective received signal strength of each observed BLE radio signal. The extracted UUIDs and the received signal strength values may then for example be provided to processor 200 as scanning results (e.g. for further processing by processor 200 under control of the positioning program). It is to be understood that any computer program code required for receiving and processing received BLE radio signals may be stored in an own memory of the radio interface 203 and executed by an own processor of the radio interface 203 or it may be stored for example in memory 202 and executed for example by processor 200.

Moreover, processor 200 controls one or more optional sensors 204 configured for determining sensor information indicating a position or movement of mobile device 2. The determined sensor information may be provided to processor 200. Examples of sensors 204 are a GNSS sensor (e.g. a GPS sensor and/or a Galileo sensor), an inertial or motion sensor (e.g. a speed sensor, an acceleration sensor, a shock sensor, an activity or step sensor, an orientation sensor like a compass or a gyroscope), an optical sensor (e.g. a camera), or a combination thereof.

Processor 200 further controls an optional radio interface 205 configured to communicate via a cellular radio network (e.g. to transmit and receive cellular radio signals). For example, radio interface 205 may be or may comprise a 2G/3G/4G/5G radio transceiver. Mobile device 2 may use radio interface 205 to communicate with positioning server 3 of system 1 (e.g. via the internet). For example, mobile device 2 may use radio interface 205 to transmit radio fingerprint observation reports to positioning server 3 and/or receive radio map information from positioning server 3.

The components 201 to 205 of mobile device 2 may for instance be connected with processor 200 by means of one or more serial and/or parallel busses.

It is to be understood that mobile device 2 may comprise various other components like a user interface for receiving user input

Fig. 3 is a block diagram of an exemplary embodiment of positioning server 3 according to the invention. In the following, it is assumed that positioning server 3 of system 1 of Fig. 1 corresponds to this positioning server 3.

Positioning server 3 comprises a processor 300. Processor 300 may represent a single processor or two or more processors, which are for instance at least partially coupled, for instance via a bus. Processor 300 executes a computer program code stored (e.g. computer program code causing positioning server 3 to determine a radio map of the predetermined environment of system 1 based on radio fingerprint observation reports collected by mobile devices like mobile devices 2-1 to 2-3) in program memory 301, and interfaces with a main memory 302. Program memory 301 may also contain an operating system for processor 300 and radio map information representing a radio map of the predetermined environment system 1. Some or all of memories 301 and 302 may also be included into processor 300. One of or both of memories 301 and 302 may be fixedly connected to processor 300 or at least partially removable from processor 300, for example in the form of a memory card or stick.

Processor 300 further controls a network interface 303 which is configured to communicate via a communication network (e.g. the internet). Positioning server 3 may use network interface 303 to communicate with mobile devices 2-1 to 2-3 of Fig. 1 (e.g. via the internet). For example, positioning server 3 may use network interface 303 to receive radio fingerprint observation reports from mobile devices 2-1 to 2-3 and/or transmit radio map information to mobile devices 2-1 to 2-3.

The components 301 to 303 of positioning server 3 may for example be connected with processor 300 by means of one or more serial and/or parallel busses.

It is to be understood that positioning server 3 may comprise various other components like a user interface for receiving user input.

Fig. 4 is a block diagram of an exemplary embodiment of a radio device 4 according to the invention. In the following, it is assumed that this radio device 4 is a BLE beacon and corresponds to BLE beacons 4-1 to 4-5 of system 1.

BLE beacon 4 comprises a processor 400. Processor 400 may represent a single processor or two or more processors, which are for instance at least partially coupled, for instance via a bus. Processor 400 executes a program code stored in memory(-ies) 401. Memory(-ies) 401 may also comprise an operating system for processor 400. Memory(-ies) 401 may for instance comprise a first memory portion that is fixedly installed in BLE beacon 4, and a second memory portion that is removable from beacon 4, for instance in the form of a removable SD memory card. Some or all of memory(ies) 401 may also be included into processor 400. Memory(ies) 401 may for instance be a volatile or non-volatile memory. It may for instance be a RAM or DRAM memory. It may for instance be a FLASH memory (or a part thereof), any of a ROM, PROM, EPROM, EEPROM, MRAM or a FeRAM (or a part thereof) and/or a hard disc (or a part thereof), to name but a few examples. It may for instance be used as a working memory for processor 400 when executing an operating system and/or computer program code.

Processor 400 further controls a radio interface 402 configured to receive and/or transmit BLE radio signals. For instance, radio interface 402 may at least comprise a BLE transmitter. The radio interface 402 may additionally comprise a BLE receiver. The transmitter and receiver may also be part of a BLE transceiver. The BLE transmitter enables BLE beacon 4 to transmit BLE radio signals in line with any current or future version of the Bluetooth standard supporting a low energy mode. For example, the BLE transmitter may be configured to automatically and repeatedly transmit BLE radio signals like an advertisement signal. As disclosed above in more detail, such a BLE radio signal may contain and/or represent positioning support information (e.g. a UUID of BLE beacon 4). Likewise, the BLE receiver enables BLE beacon 4 to receive BLE radio signals in line with any current or future version of the Bluetooth standard supporting a low energy mode.

The components 401 to 402 of BLE beacon 4 may for example be connected with processor 400 by means of one or more serial and/or parallel busses.

It is to be understood that BLE beacon 4 may comprise various other components.

Fig. 5 is a flow chart 500 illustrating an exemplary embodiment of a method according to the invention. Without limiting the scope of the invention, it is assumed in the following that mobile device 2-1 as described above with respect to Fig. 1 performs the steps of flow chart 500. In particular, it is assumed in the following that mobile device 2-1 performs steps 501 to 503 under control of a positioning program and optional steps 504 to 505 under control of at least one application program.

Therein, the steps of flowchart 500 may be understood to be performed under control of the positioning program and the application program, respectively, when the positioning program and the application program run on the mobile device and cause the mobile device to perform steps 501 to 503 and 504 to 505, respectively. To this end, computer program code representing the positioning program and the at least one application program may be stored in program memory 201. When the computer program code representing the positioning program and the at least one application program is loaded into main memory 202 and executed by processor 200, it may cause mobile device 2-1 to perform steps of flow chart 500.

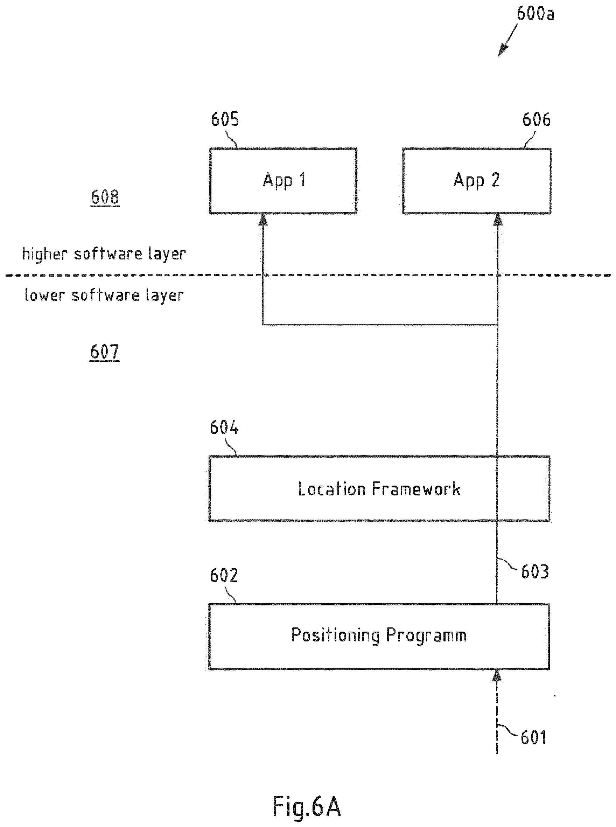

Fig. 6A illustrates an exemplary software architecture 600a of mobile device 2-1 relating to the execution of the positioning program having reference sign 602 and two application programs App1 and App2 having reference signs 605 and 606, respectively. As apparent from Fig. 6A, positioning program 602 is part of a lower software layer 607 like an operating system layer or a service layer and application programs 605 and 606 are part of a higher software layer like the application layer. When positioning program 602 is executed by processor 200, it may for example provide certain positioning-related services to other programs like application programs 605 and 606. Positioning program 602 may for example communicate with other programs like application programs 605 and 606 by means of one or more programming interfaces being part of or defined by a location framework 604 of the operating system of mobile device 2-1. An example of such a location framework is the android.location API package of the Android operating system which contains the framework API classes that define location-based; and an example of such a programming interface is the "OnNmeaMessageListener" interface of the android.location API package which may be implemented by application programs 605 and 606 to receive NMEA data from positioning program 602 via the location framework 604 as indicated by arrow 603 in Fig. 6A. In the following, it is assumed that mobile device 2-1 performs steps 501 to 503 of flowchart 500 under control of positioning program 602 and optional steps 504 to 505 of flowchart 500 under control of application program 605.

In step 501, a position of the mobile device is estimated at least partially based on one or more radio signal parameters obtained by the mobile device.

As disclosed above, the radio map may be used for estimating of a position of mobile device 2-1 at least partially based on obtained radio signal parameter(s). For example, if mobile device 2-1 obtains radio signal parameters (e.g. UUIDs, received signal strength value/indicator, etc.) of three BLE radio signals transmitted by BLE beacons 4-1, 4-2 an 4-3 when scanning for observable radio signals at its present position, it may for example be estimated by use of the radio map that the present position of mobile device is within the overlapping region of the coverage areas described by the radio models of BLE beacons 4-1, 4-2 an 4-3 represented by or contained in the radio map. Alternatively or additionally, a position of mobile device 2-1 may be estimated by (1) triangulation at least partially based on AOA values of the three BLE radio signals and/or (2) trilateration or multilateration at least partially based on RSSIs or TOF values of the three BLE radio signals.

For example, the computer program code representing the positioning program 602 may contain and/or represent instructions for accordingly estimating the position of mobile device 2-1 at least partially based on radio signal parameters of one or more radio signals obtained by mobile device 2-1 at this position. As disclosed above, radio interface 203, is configured, alone or together with processor 200, to determine one or more radio signal parameters of BLE radio signals observed (e.g. received) when scanning for observable radio signals. For example, the radio signal parameters obtained by radio interface 203 may be received by positioning program 602 from another program like a driver program for radio interface 203 executed by processor 200 as indicated by arrow 601 in Fig. 6A.

As a result of the estimating in step 501, position data representing the estimated position are obtained.

In step 502, a digital signature of the positioning data is determined.

The digital signature may be determined according to a digital signature algorithm and/or a cryptography hash algorithm. Input parameters of the digital signature algorithm may be a cryptography key and the position data or a hash value of the position data determined according to the cryptography hash algorithm. Examples for such a digital signature algorithm are DSA and RSA; and examples for such a cryptography hash algorithm are SHA-1, SHA-2 and MD5 as disclosed above in more detail.

In the following it is assumed that the computer program code representing the positioning program 602 contains and/or represents instructions for determining the digital signature of the position data according to a digital signature algorithm and a cryptography hash algorithm. Moreover, it is assumed in the following that the position data obtained as a result of the estimating in step 501 are used as input parameters to the cryptography hash algorithm and that hash value of the position data determined according to the cryptography hash algorithm and a private key are used as input parameters to the digital signature algorithm for determining the digital signature of the position data.

The private key may be a private key of an asymmetric cryptography key pair. Moreover, the private key may be embedded in the position program 602, for example the private key or a representation of the private key is part of the computer program code representing the positioning program. Accordingly, the private key may be stored in the same memory area or the same data container of the mobile device 2-1 like the computer program code representing the positioning program and, thus, it may be considered to be accessible by the positioning program. To prevent other programs and/or users from accessing the private key, it may be part of the computer program code representing the positioning program in encrypted form.

As a result of the determining in step 502, signature data representing the digital signature of the position data are obtained.

In step 503, the position data obtained as a result of the estimating in step 501 and the signature data obtained as a result of the determining in step 502 are provided to application programs 605 and 606.

As disclosed above, positioning program 602 may communicate with application programs 605 and 606 by means of one or more programming interfaces being part of or defined by a location framework 604 of the operating system of mobile device 2-1. An example of such a location framework is the android.location API package of the Android operating system which contains the framework API classes that define location-based; and an example of such a programming interface is the "OnNmeaMessageListener" interface of the android.location API package which may be implemented by application programs 605 and 606 to receive NMEA data from positioning program 602 via the location framework 604 as indicated by arrow 603 in Fig. 6A.

Accordingly, the position data and the signature data may be provided in step 602 such that they are receivable by application programs 605 and 606 by means of such a programming interface being part of or defined by a location framework 604 of the operating system of mobile device 2-1. In case of the android.location API package, the position data and the signature data may be provided as NMEA data of one or more NMEA messages by means of the "OnNmeaMessageListener" interface. An NMEA message at least partially containing or representing the position data may be a talker message or a talker sentence as specified by a NMEA standard. An NMEA message at least partially containing or representing the signature data may be understood to be a proprietary message or a proprietary sentence. The NMEA standards allow the definition of such proprietary messages or proprietary sentences. This is particularly advantageous because it allows a backwards compatibility with application programs not supporting the proprietary message or a proprietary sentence containing or representing the signature data, because such programs may still recognize the message or sentence as proprietary and, for example, simply ignore it.

In optional step 504, the position data and the signature data are received by application programs 605 and 606. In particular, the position data and the signature data provided under control of positioning program 602 in step 503 may be received by application programs 605 and 606 in step 504.

For example, the position data and the signature data are received by means of one or more programming interfaces being part of or defined by a location framework 604 of the operating system of mobile device 2-1, like the "OnNmeaMessageListener" interface of the android.location API package.

In optional step 505, the authenticity and/or integrity of the position data received in step 504 is verified at least partially based on the signature data received in step 504.

As disclosed above, verifying the authenticity of the position data may be understood to mean that it is verified that the position data were estimated under control of the positioning program in step 501; and verifying the integrity of the position data may be understood to mean that it is verified that the position data have not been altered (e.g. manipulated) after the estimating in step 501 (e.g. by a location malware).

Verifying the authenticity and/or integrity of the position data may be performed according to a digital signature algorithm and/or a cryptography hash algorithm which receives the position data, the digital signature (or signature data representing the digital signature) and a public key as input parameter. For example, the digital signature algorithm and the cryptography hash algorithm may be used to confirm that the digital signature received in step 504 is valid for the position data received in step 504. If it is not confirmed that the digital signature received in step 504 is valid for the position data received in step 504, the authenticity and/or integrity of the position data may be not verified or verifiable in step 505.

In the following it is assumed that the computer program code representing the application program 605 contains and/or represents instructions for verifying the authenticity and/or integrity of the position data at least partially based on the signature data according to a digital signature algorithm and a cryptography hash algorithm (e.g. algorithms corresponding to the algorithms used for determining the digital signature in step 502). Moreover, it is assumed in the following that the position data received in step 504 are used as input parameters to the cryptography hash algorithm and that a hash value of the position data determined according to the cryptography hash algorithm and a public key are used as input parameters to the digital signature algorithm for verifying the authenticity and/or integrity of the position data.

The public key may corresponds to the private key which is used as input parameter to the digital signature algorithm for determining the digital signature in step 502. Accordingly, the private key and the public key may be part of the same asymmetric cryptography key pair. Moreover, the public key may be embedded in the application program 605, for example the public key or a representation of the public key is part of the computer program code representing the application program. Accordingly, the public key may be stored in the same memory area or the same data container of the mobile device 2-1 like the computer program code representing the application program 605 and, thus, it may be considered to be accessible by the application program 605. To prevent other programs and/or users from accessing the private key, it may be part of the computer program code representing the application program 605 in encrypted form.

For example, application program 605 may only further process or allow further processing of the position data received in step 605, if the authenticity and/or integrity of the position data is verified in step 505. Otherwise, application program 605 may reject the position data.

For example, application program 606 may have no access to the public key and, thus, cannot verify the authenticity and/or integrity of the position data received in step 505. Accordingly, application program 606 may further process the position data in any event.

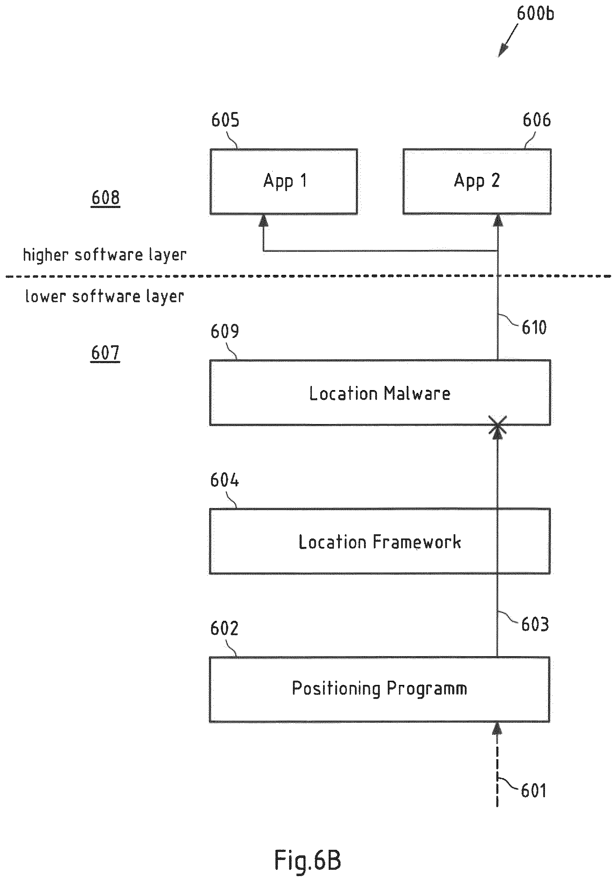

By providing the position data together with the signature data to application program 605, the application program is thus enabled to verify the authenticity and/or integrity of the position data and, thus, to recognize potentially manipulated position data. This explained with respect to exemplary software architecture 600b of Fig. 6B which basically corresponds to exemplary software architecture 600a of Fig. 6a. However, a location malware 609 has been added in Fig. 6B which intercepts the position data and signature data provided by the positioning program 602 in step 503. For example, location malware 609 provides manipulated position data to application programs 605 and 606. However, since location malware 609 does not have access to the private key used for determining the signature data in step 502, it cannot determine a valid digital signature for the position data. Accordingly, the authenticity and/or integrity of the manipulated position data will not be verified in step 505 under control of application program 605. Application program 605 thus identifies or recognizes the manipulated position data as potentially manipulated. In contrast, application program 606 which has no access to the public key cannot perform the verifying according to step 505 and, thus, will not identify or recognize the position data as (e.g. potentially) manipulated. The present invention thus enables recognizing manipulation of position data.

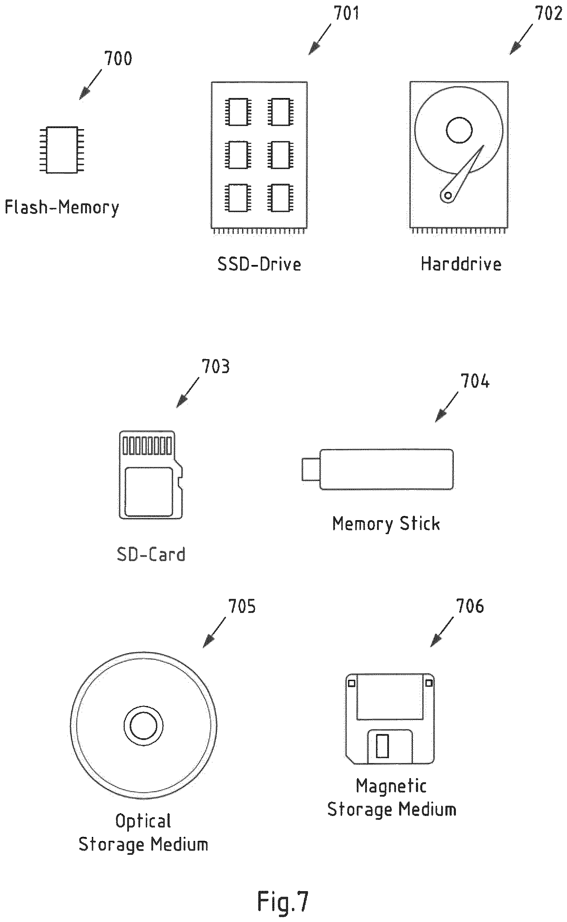

Fig. 7 is a schematic illustration of examples of tangible and non-transitory computer-readable storage media according to the present invention that may for instance be used to implement memory 201 of Fig. 2, memory 301 of Fig. 3 and memory(-ies) 401 of Fig. 4. To this end, Fig. 7 displays a flash memory 700, which may for instance be soldered or bonded to a printed circuit board, a solid-state drive 701 comprising a plurality of memory chips (e.g. Flash memory chips), a magnetic hard drive 702, a Secure Digital (SD) card 703, a Universal Serial Bus (USB) memory stick 704, an optical storage medium 705 (such as for instance a CD-ROM or DVD) and a magnetic storage medium 706.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 201, 301 and 401 of Figs. 2, 3 and 4, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method performed by a mobile device (2-1) at least partially under control of a positioning program (602) of the mobile device, the method comprising:
- estimating (501), by the positioning program, a position of said mobile device at least partially based on one or more radio signal parameters obtained by said mobile device, wherein position data representing said estimated position of said mobile device are obtained as a result of said estimating;
- determining (502), by the positioning program, a digital signature of said position data, wherein signature data representing said digital signature of said position data are obtained as a result of said determining;
- providing (503), by the positioning program, said position data and said signature data to one or more application programs (605, 606) of the mobile device.

2. The method according to claim 1, wherein said digital signature is determined at least partially based on a private key embedded in or accessible by said positioning program (602) and a digital signature algorithm.

3. The method according to any of claims 1 and 2, wherein said position data and said signature data are provided to said application programs (605, 606) by means of a predefined programming interface.

4. The method according to claim 3, wherein said predefined programming interface is part of or defined by an operating system of said mobile device..

5. The method according to any of claims 1 to 4, wherein at least one of said position data and said signature data are provided by means of one or more National Marine Electronics Association, NMEA, messages.

6. The method according to any of claims 1 to 5, wherein the method is performed by said mobile device (2-1) under control of said positioning program (602).

7. The method according to any of claims 1 to 6, the method further comprising:
- receiving (504), by at least one application program (605) of said one or more application programs, said position data and said signature data;
- verifying (505), under control of said at least one application program (605),an authenticity and/or integrity of said position data at least partially based on said signature data.

8. The method according to claim 7, wherein said authenticity and/or integrity of said position data is verified further based on a public key embedded in or accessible by said at least one application program.

9. The method according to any of claims 7 and 8, the method further comprising at least one of the following, if said authenticity and/or integrity of said position data is verified:
- identifying, under control of said at least one application program (605), said position data as trustworthy;
- processing, under control of said at least one application program (605), said position data.

10. The method according to any of claims 7 and 9, the method further comprising at least one of the following, if said authenticity and/or integrity of said position data is not verified:
- identifying, under control of said at least one application program (605), said position data as potentially manipulated;
- rejecting, under control of said at least one application program (605), said position data.

11. The method according to any of claims 1 to 10, wherein said one or more radio signal parameters are radio signal parameters of one or more radio signals observed by said mobile device (2-1) at an observation position.

12. The method according to claim 11, wherein each of said one or more radio signals is one of:
- a GNSS satellite radio signal,
- a cellular radio signal,
- a Bluetooth radio signal;
- a Bluetooth Low Energy radio signal;
- an LPWAN radio signal;
- a WLAN radio signal.

13. A computer program code of a positioning program (602) for a mobile device (2-1), the computer program code when executed by a processor (200) of said mobile device causing said mobile device to perform the method according to any of claims 1 to 6.

14. A mobile device (2-1), said mobile device comprising at least one processor (200) and at least one memory (201, 202) including computer program code, the at least one memory (201,202) and the computer program code configured to, with the at least one processor (200), cause said mobile device at least to perform the method according to any of claims 1 to 11.

15. A mobile device according to claim 14, wherein said computer program code comprises said computer program code of a positioning program (602) according to claim 13.

## Patentansprüche

1. Verfahren, das von einem mobilen Gerät (2-1) zumindest teilweise unter der Kontrolle eines Positionierungsprogramm (602) des mobilen Geräts durchgeführt word, wobei das Verfahren umfasst:
- Schätzen (501), durch das Positionierungsprogramm, einer Position des mobilen Geräts zumindest teilweise basierend auf einem oder mehreren von dem mobilen Gerät erhaltenen Funksignalparameter, wobei die Positionsdaten, die die geschätzte Position des mobilen Geräts repräsentieren, als Ergebnis des Schätzens erhalten werden;
- Bestimmen (502), durch das Positionierungsprogramm, einer digitale Signatur der Positionsdaten, wobei Signaturdaten, die die digitale Signatur der Positionsdaten repräsentieren, als Ergebnis der Bestimmung erhalten werden;
- Bereitstellen (503), durch das Positionierungsprogramm, der Positionsdaten und der Signaturdaten an ein oder mehrere Anwendungsprogramme (605, 606) des mobilen Geräts.

2. Verfahren nach Anspruch 1, wobei die digitale Signatur zumindest teilweise basierend auf einem privaten Schlüssels, der in das Positionierungsprogramm (602) eingebettet oder für dieses zugänglich ist, und einem digitalen Signaturalgorithmus bestimmt wird.

3. Verfahren nach einem der Ansprüche 1 und 2, wobei die Positionsdaten und die Signaturdaten den Anwendungsprogrammen (605, 606) durch eine vordefinierte Programmierschnittstelle zur Verfügung gestellt werden

4. Verfahren nach Anspruch 3, wobei die vordefinierte Programmierschnittstelle Teil von einem oder durch ein Betriebssystem des mobilen Geräts definiert ist.

5. Verfahren nach einem der Ansprüche 1 bis 4, wobei mindestens eine der Positionsdaten und der Signaturdaten durch eine oder mehrere National Marine Electronics Association, NMEA, Nachrichten zur Verfügung gestellt wird.

6. Verfahren nach einem der Ansprüche 1 bis 5, wobei das Verfahren durch das mobile Gerät (2-1) unter Kontrolle des Positionierungsprogramms (602) durchgeführt wird.

7. Verfahren nach einem der Ansprüche 1 bis 6, wobei das Verfahren ferner umfasst:
- Empfangen (504) der Positionsdaten und der Signaturdaten durch mindestens ein Anwendungsprogramm (605) des/r einen oder mehreren Anwendungsprogramme;
- Verifizieren (505), unter der Kontrolle des mindestens einen Anwendungsprogramms (605), der Authentizität und/oder Integrität der Positionsdaten zumindest teilweise basierend auf den Signaturdaten.

8. Verfahren nach Anspruch 7, wobei die Authentizität und/oder Integrität der Positionsdaten ferner zumindest teilweise basierend auf einem öffentlichen Schlüssel, der in das mindestens eine Anwendungsprogramm eingebettet oder für dieses zugänglich ist, verifiziert wird.

9. Verfahren nach einem der Ansprüche 7 und 8, wobei das Verfahren ferner mindestens eine der folgenden Maßnahmen umfasst, wenn die Authentizität und/oder Integrität der Positionsdaten verifiziert wurde:
- Identifizieren, unter Kontrolle des mindestens einen Anwendungsprogramms (605), der Positionsdaten als vertrauenswürdig;
- Verarbeiten, unter Kontrolle des mindestens einen Anwendungsprogramms (605), der Positionsdaten.

10. Verfahren nach einem der Ansprüche 7 und 9, wobei das Verfahren ferner mindestens eine der folgenden Maßnahmen umfasst, wenn die Authentizität und/oder Integrität der Positionsdaten nicht verifiziert wurde:
- Identifizieren, unter Kontrolle des mindestens einen Anwendungsprogramms (605), der Positionsdaten als potenziell manipuliert;
- Zurückweisen, unter Kontrolle des mindestens einen Anwendungsprogramms (605), der Positionsdaten.

11. Verfahren nach einem der Ansprüche 1 bis 10, wobei der/die eine oder mehreren Funksignalparameter Funksignalparameter eines oder mehrerer Funksignale sind, die von dem mobilen Gerät (2-1) an einer Beobachtungsposition beobachtet werden.

12. Verfahren nach Anspruch 11, wobei jedes der ein oder mehreren Funksignale eines der folgenden ist:
- ein GNSS-Satellitenfunksignal,
- ein Mobilfunksignal,
- ein Bluetooth-Funksignal;
- ein Bluetooth Low Energy Funksignal;
- ein LPWAN-Funksignal;
- ein WLAN-Funksignal.

13. Computerprogrammcode eines Positionierungsprogramms (602) für ein mobiles Gerät (2-1), wobei der Computerprogrammcode, wenn er von einem Prozessor (200) des mobilen Geräts ausgeführt wird, das mobile Gerät veranlasst, das Verfahren nach einem der Ansprüche 1 bis 6 auszuführen.

14. Mobiles Gerät (2-1), wobei das mobile Gerät mindestens einen Prozessor (200) und mindestens einen Speicher (201, 202) mit Computerprogrammcode umfasst, wobei der mindestens eine Speicher (201, 202) und der Computerprogrammcode so konfiguriert sind, dass sie zusammen mit dem mindestens einen Prozessor (200) das mobile Gerät zumindest veranlassen, das Verfahren nach einem der Ansprüche 1 bis 11 auszuführen.

15. Mobiles Gerät nach Anspruch 14, wobei der Computerprogrammcode den Computerprogrammcode eines Positionierungsprogramms (602) nach Anspruch 13 umfasst.

## Revendications

1. Un procédé exécuté par un dispositif mobile (2-1) au moins partiellement sous le contrôle d'un programme de positionnement (602) du dispositif mobile, le procédé comprenant:
- estimer (501), par le programme de positionnement, une position dudit dispositif mobile au moins partiellement basée sur un ou plusieurs paramètres de signal radio obtenus par ledit dispositif mobile, où les données de position représentant ladite position estimée dudit dispositif mobile sont obtenues comme résultat de ladite estimation;
- déterminer (502), par le programme de positionnement, une signature digitale desdites données de position, où les données de signature représentant ladite signature digitale desdites données de position sont obtenues comme résultat de ladite détermination ;
- fournir (503), par le programme de positionnement, lesdites données de position et lesdites données de signature à un ou plusieurs programmes d'application (605, 606) du dispositif mobile.

2. Le procédé selon la revendication. 1, dans lequel ladite signature digitale est déterminée au moins partiellement sur la base d'une clé privée incorporée ou accessible par ledit programme de positionnement (602) et d'un algorithme de signature digitale.

3. Le procédé selon l'une des revendications 1 et 2, dans lequel lesdites données de position et lesdites données de signature sont fournies auxdits programmes d'application (605, 606) au moyen d'une interface de programmation prédéfinie.

4. Le procédé selon la revendication 3, dans lequel ladite interface de programmation prédéfinie fait partie de ou est définie par un système d'exploitation dudit appareil mobile.

5. Le procédé selon l'une des revendications 1 à 4, dans lequel au moins une desdites données de position et desdites données de signature est fournie au moyen d'un ou de plusieurs messages National Marine Electronics Association, NMEA.

6. Le procédé selon l'une des revendications 1 à 5, dans lequel le procédé est exécuté par ledit dispositif mobile (2-1) sous contrôle dudit programme de positionnement (602).

7. Le procédé selon l'une des revendications 1 à 6, le procédé comprenant en outre :
- recevoir (504), par au moins un programme d'application (605) dudit un ou desdits plusieurs programmes d'application, lesdites données de position et lesdites données de signature;
- vérifier (505), sous contrôle dudit au moins un programme d'application (605), une authenticité et/ou une intégrité desdites données de position au moins partiellement sur la base desdites données de signature.

8. Le procédé selon la revendication 7, dans lequel ladite authenticité et/ou intégrité desdites données de position est vérifiée en outre sur la base d'une clé publique incorporée dans ou accessible par ledit au moins un programme d'application.

9. Le procédé selon l'une des revendications 7 et 8, le procédé comprenant en outre au moins l'un des éléments suivants, si ladite authenticité et/ou intégrité desdites données de position est vérifiée:
- identifier, sous contrôle dudit au moins un programme d'application (605), lesdites données de position comme fiables ;
- traiter, sous contrôle dudit au moins un programme d'application (605), lesdites données de position.

10. Le procédé selon l'une des revendications 7 et 9, le procédé comprenant en outre au moins l'un des éléments suivants, si ladite authenticité et/ou intégrité desdites données de position n'est pas vérifiée :
- identifier, sous contrôle dudit au moins un programme d'application (605), lesdites données de position comme potentiellement manipulées ;
- rejeter, sous contrôle dudit au moins un programme d'application (605), lesdites données de position.

11. Le procédé selon l'une quelconque des revendications 1 à 10, dans lequel ledit un ou lesdits plusieurs paramètres de signal radio sont des paramètres de signal radio d'un ou de plusieurs signaux radio observés par ledit dispositif mobile (2-1) à une position d'observation.

12. Le procédé selon la revendication 11, dans lequel chacun de dudit un ou desdits plusieurs signaux radio est l'un des suivants:
- un signal radio satellite GNSS
- un signal radio cellulaire,
- un signal radio Bluetooth;
- un signal radio Bluetooth Low Energy
- un signal radio LPWAN;
- un signal radio WLAN.

13. Un code de programme informatique d'un programme de positionnement (602) pour un dispositif mobile (2-1), le code de programme informatique, lorsqu'il est exécuté par un processeur (200) dudit dispositif mobile, amenant ledit dispositif mobile à exécuter le procédé selon l'une des revendications 1 à 6.

14. Un dispositif mobile (2-1), ledit dispositif mobile comprenant au moins un processeur (200) et au moins une mémoire (201, 202) incluant du code de programme informatique, l'au moins une mémoire (201, 202) et le code de programme informatique étant configurés pour, avec l'au moins un processeur (200), amener ledit dispositif mobile au moins à exécuter le procédé selon l'une des revendications 1 à 11.

15. Un dispositif mobile selon la revendication 14, dans lequel ledit code de programme informatique comprend ledit code de programme informatique d'un programme de positionnement (602) selon la revendication 13.
